# EUROPÄISCHE PATENTSCHRIFT

(11) **EP 4 512 638 B1**
(45) Veröffentlichungstag und Bekanntmachung des Hinweises auf die Patenterteilung: **25.03.2026**
(21) Anmeldenummer: 24191693.1
(22) Anmeldetag: 30.07.2024
(51) Int. Cl.: B60C 11/13

(54) **LAUFSTREIFEN FÜR EINEN FAHRZEUGREIFEN UND FAHRZEUGREIFEN**
TREAD FOR A VEHICLE TYRE AND VEHICLE TYRE
BANDE DE ROULEMENT POUR UN PNEU DE VÉHICULE ET PNEU DE VÉHICULE

(30) Priorität: 22.08.2023 DE 102023208000
(43) Veröffentlichungstag der Anmeldung: 26.02.2025
(73) Patentinhaber: Continental Reifen Deutschland GmbH, 30175 Hannover (DE)
(72) Erfinder: Proksa, Andrej, 020 01 Púchov (SK)
(74) Vertreter: Continental Corporation

(56) Entgegenhaltungen:
- DE-A1- 102020 212 560
- DE-A1- 102020 214 281

## Beschreibung

Die Erfindung betrifft einen Laufstreifen für einen Fahrzeugreifen, wobei eine Profilrille mit einem radial oberen Bereich und einem radial unteren Bereich sowie mit einer ersten Rillenflanke und einer zweiten Rillenflanke in dem Laufstreifen ausgebildet ist. Hierbei ist eine in dem radial unteren Bereich zwischen einem ersten Punkt an der ersten Rillenflanke und einem zweiten Punkt an der zweiten Rillenflanke gemessene maximale Breite der Profilrille größer als eine in dem radial oberen Bereich zwischen den beiden Rillenflanken gemessene oberen Breite der Profilrille. Weiterhin ist hierbei ein Boden der Profilrille an einem radial tiefsten Punkt konkav gekrümmt, wobei in dem radial unteren Bereich die erste Rillenflanke an dem ersten Punkt und die zweite Rillenflanke an dem zweiten Punkt konkave Krümmungen aufweisen. Hierbei sind die Krümmung um den radial tiefsten Punkt und die Krümmung um den ersten Punkt durch eine erste geradlinige Verbindung verbunden, wobei die Krümmungen um den radial tiefsten Punkt und die Krümmung um den zweiten Punkt durch eine zweite geradlinige Verbindung verbunden sind.

Profilrillen, die in einem radial unteren Bereich eine größere Breite aufweisen als in einem radial oberen Bereich sind an sich bekannt. US 2322505 A beschreibt einen Laufstreifen, umfassend eine Vielzahl von funktionell durchgehenden, sich in Umfangsrichtung erstreckender Rippen sowie laterale Überhänge substanzieller Dicke, die an Bodenkontaktflächen der Rippen angrenzen und in von den Rippen definierte Rillen hineinragen, wobei die lateralen Abmessungen der Überhänge so gewählt sind, dass sie unter Last und in Eingriff mit einer Stützfläche in Kontakt mit benachbarten Einheiten kommen. Hierdurch sollen eine Stabilität und eine Abnutzungscharakteristik des Laufstreifens verbessert werden. DE 698 07 901 T2 beschreibt ein Profil, bei dem im Neuzustand ein Block im Schnitt gesehen von Rillen begrenzt wird und mit einem Kanal versehen ist, der sich radial innen und in zentraler Position in Bezug auf den Block befindet. Dieser Kanal hat im Wesentlichen die Form eines O und steht mit einem Einschnitt in Verbindung, dessen Verlauf in der Stärke des Laufbands einer Folge von gekrümmten Linien folgt, wobei der Einschnitt im Neuzustand an der Lauffläche mündet. Hiermit soll das Laufbandprofil in Bezug auf Haftungs- und Verhaltensleistungen optimiert werden, sowohl im Ursprungszustand als auch während der Lebensdauer des Luftreifens, ohne dass dies die Leistung des Luftreifens während seiner Lebensdauer unter Abnutzung beeinträchtigt. DE 10 2020 212 560 A1 beschreibt einen Fahrzeugluftreifen mit einer Umfangsrille, wobei ein zweiter radial innerer Rillenabschnitt gegenüber einem ersten Rillenabschnitt in Achsrichtung erweitert ist. DE 10 2020 214 281 A1 beschreibt einen Fahrzeugluftreifen mit einer Umfangsrille, umfassend unterschiedliche radiale Rillenabschnitte.

Der Erfindung liegt die Aufgabe zugrunde, einen Laufstreifen bzw. Fahrzeugreifen mit einer Profilrille des eingangs beschriebenen Typs zu schaffen, wobei die Profilrille ein einfaches, elegantes und gut skalierbares Design mit einer besonders geringen Rissanfälligkeit aufweisen soll.

Die gestellte Aufgabe wird erfindungsgemäß durch die Merkmale des Anspruchs 1 gelöst.

Mit anderen Worten wird die Grundform des radial unteren Bereichs an ein imaginäres Dreieck angelehnt, dessen eine Spitze im Bereich des radial tiefsten Punkts und dessen andere Spitzen im Bereich des ersten und zweiten Punktes liegen. Im Gegensatz hierzu sind die radial unteren Bereiche gemäß dem Stand der Technik als Oval eher einem Viereck nachempfunden. In jedem Falle schließen geradlinige Flankensegmente im radial unteren Bereich gemäß dem Stand der Technik kleinere Winkel ein als dies erfindungsgemäß vorgesehen ist. Die Erfindung erkennt, dass hierdurch die konkaven Krümmungen sowohl an dem tiefsten Punkt als auch an dem ersten und zweiten Punkt mit ausreichend großen Krümmungsradien ausgeführt werden können, um eine Rissanfälligkeit zu verringern. Weiterhin kann durch die Dreiecksform eine besonders vorteilhafte Aufnahme von Kräften und deren gleichmäßige Verteilung über den gesamten radial unteren Bereich erzielt werden. Insbesondere kann durch die erfindungsgemäße Formgebung eine Fokussierung der an den Rillenwänden wirkenden Kräfte auf einen Rillenboden verhindert oder verringert werden.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeugreifen angeordneten Laufstreifen mit wiederum bestimmungsgemäß an einem Fahrzeug angebrachtem Fahrzeugreifen. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Fahrzeugreifens verlaufen. Die Basisfläche fällt zusammen mit jener glatten Oberfläche, welche der Fahrzeugreifen aufweisen würde, wenn keinerlei kleinskalige Profilelemente, wie etwa Rillen oder radial hervorstehende Rippen vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximalen Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine radial hervorstehende Rippe auf dem Laufstreifen angeordnet ist, verläuft die Basisfläche als imaginäre Fläche unter der radial hervorstehenden Rippe weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden

Die erste und die zweite geradlinige Verbindung sind vorzugsweise in einem Winkel von 45° bis 70°, weiter vorzugsweise von 55° bis 65° zueinander ausgerichtet. Diese Bereiche beinhalten einen Winkel von 60° ein, der charakteristisch für ein gleichseitiges Dreieck ist. Ein gleichseitiges Dreieck zeichnet sich durch einen besonders hohen Grad an Symmetrie aus, was wiederum eine gleichmäßige Verteilung von Kräften begünstigen kann.

Die Krümmung um den radial tiefsten Punkt und die Krümmungen um den ersten und zweiten Punkt gehen vorzugsweise knickfrei in die erste und zweite geradlinige Verbindung über. Ein knickfreier Übergang ist durchgehend anhand wohldefinierter Tangenten beschreibbar.

Die konkaven Krümmungen an dem radial tiefsten Punkt und an dem ersten und zweiten Punkt an den Rillenflanken können jeweils durch einen oder mehrere Krümmungsradien beschrieben werden. In einer bevorzugten Ausführungsform sind die konkaven Krümmungen jeweils als Kreisbogen mit jeweils einem einzigen Krümmungsradius ausgeführt. Wenn Maße von Krümmungsradien angegeben werden, so ist entweder ein Krümmungsradius zu einem solchen Kreisbogen einer uniformen Krümmung gemeint oder der kleinste Krümmungsradius einer dementsprechend größten lokalen Krümmung entlang des Verlaufs einer komplexeren konkaven Krümmung mit verschiedenen Krümmungsradien.

Ein die Krümmung an dem radial tiefsten Punkt beschreibender Krümmungsradius kann eine Länge zwischen einem Drittel und zwei Dritteln der in dem radial oberen Bereich zwischen den beiden Rillenflanken gemessenen oberen Breite der Profilrille aufweisen. Alternativ lassen sich die Krümmungsradien über weitere Bereiche skalieren, wobei vorzugsweise die zwischen dem ersten Punkt an der ersten Rillenflanke und dem zweiten Punkt an der zweiten Rillenflanke gemessene maximale Breite der Profilrille mitskaliert, sodass der gesamte radial untere Bereich in seiner Größe an die Anforderungen und Abmessungen in einem gegebenen Laufstreifen angepasst werden kann.

Krümmungen an dem ersten und an dem zweiten Punkt beschreibende Krümmungsradien stehen erfindungsgemäß in einem Verhältnis von nicht mehr als 2:1 bzw. nicht weniger als 1:2 zueinander und gleichen einander vorzugsweise in ihrer Länge. Auf diese Weise kann eine Symmetrie zwischen den gegenüberliegenden Rillenflanken geschaffen werden. Weiterhin stehen erfindungsgemäß Krümmungen an dem radial tiefsten Punkt und an dem ersten und zweiten Punkt beschreibende Krümmungsradien paarweise in einem Verhältnis von nicht mehr als 2:1 bzw. nicht weniger als 1:2 zueinander und gleichen einander vorzugsweise in ihrer Länge. Auf diese Weise können in dem radial unteren Bereich wirkende Kräfte besonders gleichmäßig über die drei konkaven Krümmungen verteilt werden, sodass an jeder der Krümmungen möglichst geringe Spannungen anfallen.

Krümmungsmittelpunkte von Krümmungskreisen zu den Krümmungen an dem radial tiefsten Punkt, an dem ersten Punkt und an dem zweiten Punkt können äquidistant zu einander und folglich an den Spitzen eines imaginären gleichseitigen Dreiecks angeordnet sein. Hierdurch ergibt sich ein besonders hoher Grad an Symmetrie mit entsprechend vorteilhafter Verteilung von Kräften und Spannungen in dem radial unteren Bereich der Profilrille.

Der radial untere Bereich kann an der ersten und zweiten Rillenflanke jeweils entlang einer konvexen Krümmung in den radial oberen Bereich übergehen. Die konvexe Krümmung kann radial unmittelbar oberhalb der um den ersten bzw. zweiten Punkt verlaufenden konkaven Krümmung angeordnet sein, wobei die Krümmungen vorzugsweise knickfrei ineinander übergehen. Auf diese Weise kann eine fließende Kontur, nicht nur des radial unteren Bereichs sondern auch des Übergangs in den radial oberen Bereich geschaffen werden, was sich positiv auf Kräfteverteilung und Rissanfälligkeit an den Rillenwänden auswirken kann.

Die konvexen Krümmungen beschreibende Krümmungsradien können einander in ihrer Länge gleichen. Die konvexen Krümmungen beschreibende Krümmungsradien und die Krümmungen an dem radial tiefsten Punkt, an dem ersten Punkt und/oder an dem zweiten Punkt beschreibende Krümmungsradien können einander in ihrer Länge gleichen. Die konvexen Krümmungen können jeweils durch einen oder mehrere Krümmungsradien beschrieben werden. In einer bevorzugten Ausführungsform sind die konvexen Krümmungen jeweils als Kreisbogen mit einem einzigen Krümmungsradius ausgeführt. Durch eine ähnliche oder identische Ausführung der konkaven und konvexen Krümmungen untereinander kann eine besonders symmetrische und gleichmäßige Kräfteverteilung bewirkt werden.

Die maximale Breite in dem radial unteren Bereich der Profilrille kann zwischen 2 mm und 20 mm, vorzugsweise zwischen 4 mm und 8 mm betragen. Eine größere Breite kann zu einer höheren Entwässerungskapazität der Profilrille beitragen, wobei eine kleinere Breite beispielsweise unter dem Gesichtspunkt einer ausreichenden Steifigkeit des Laufstreifens sinnvoll sein kann.

Der radial untere Bereich kann sich über ein Viertel bis eine Hälfte einer radialen Tiefe der Profilrille erstrecken. Je geringer der Anteil des radial unteren Bereichs, desto kleiner fällt generell eine Entwässerungskapazität aus. Mit der Erstreckung des radial oberen und unteren Bereichs kann zudem eingestellt werden, ab welchem Abnutzungsgrad der radial untere Bereich an die Lauffläche des Laufstreifens tritt. Eine optimale Einstellung kann im Zusammenspiel mit der Gestaltung des restlichen Profils unter dem Gesichtspunkt einer oft als "perfomance over lifetime" bezeichneten Eigenschaft des herzustellenden Laufstreifens gefunden werden.

Die in dem radial oberen Bereich zwischen den beiden Rillenflanken gemessene obere Breite der Profilrille kann zwischen 0,5 mm und 6 mm, vorzugsweise zwischen 1 mm und 3 mm betragen. Durch solche, vergleichsweise kleinen Abmessungen kann das Eindringen von Steinen in die Rille verhindert werden. Durch den breiter ausgeführten radial unteren Bereich kann trotzdem eine ausreichende Entwässerungskapazität sichergestellt werden. Die Rillenflanken in dem radial oberen Bereich, radial oberhalb der Übergänge in den radial unteren Bereich, verlaufen vorzugsweise parallel zueinander und in Radialrichtung, wie es dem Prinzip nach aus sogenannten U-Rillen bekannt ist.

Die vor- und/oder nachstehend beschriebenen Merkmale können entlang eines Längsabschnitts der Profilrille durchgehend erfüllt sein, wobei der Längsabschnitt wenigstens fünfmal so lang, vorzugsweise wenigstens zehnmal so lang wie die maximale Breite breit sein kann. Hierdurch kann der vorteilhafte Effekt der Querschnittsform entlang der Längsrichtung skaliert werden und kann gemäß einigen Ausführungsformen auch gezielt nur abschnittsweise vorgesehen werden, sodass der erfindungsgemäße Effekt nur in ausgewählten Bereichen des Laufstreifens zum Tragen kommt.

Die erfindungsgemäß ausgeführte Profilrille ist vorzugsweise eine Umfangsrille, kann jedoch auch als Quer- oder Schrägrille vorteilhaft ausgeführt werden.

Die Erfindung betrifft außerdem einen Fahrzeugreifen mit einem Laufstreifen gemäß vor- und/oder nachstehender Beschreibung. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine perspektivische Ansicht eines Ausschnitts einer Ausführungsform eines erfindungsgemäßen Laufstreifens,
Figur 2 schematisch eine Schnittansicht einer weiteren Ausführungsform des erfindungsgemäßen Laufstreifens.

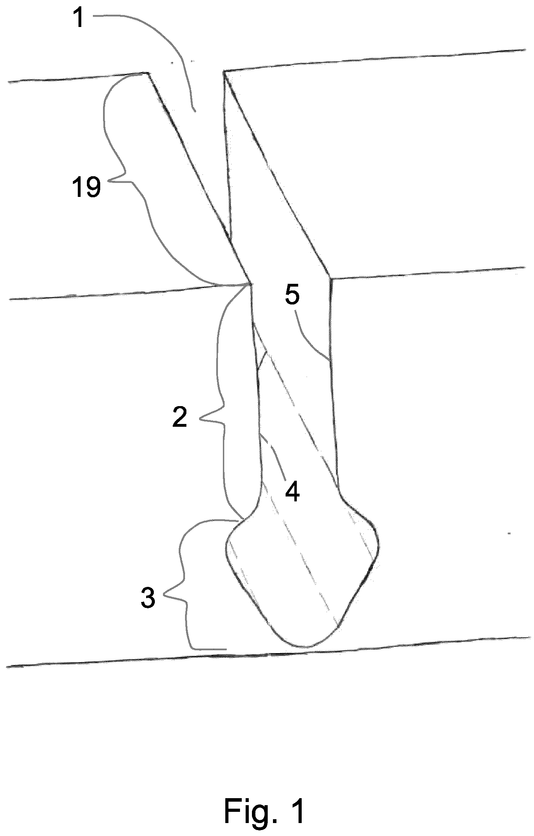

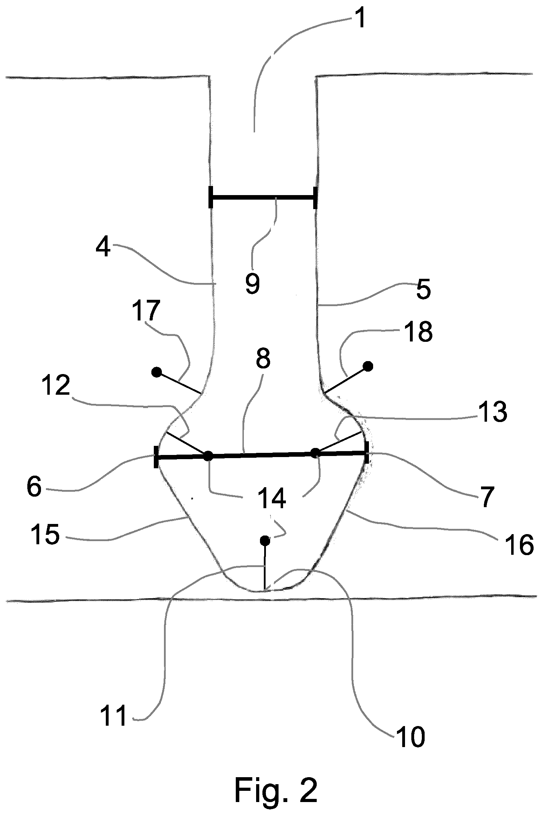

Figur 1 zeigt eine perspektivische Ansicht einer Ausführungsform eines erfindungsgemäßen Laufstreifens, wobei im oberen Bildbereich eine Lauffläche des Laufstreifens mit einer Rillenöffnung und im unteren Bildbereich in seitlicher Ansicht ein Querschnitt einer Ausführungsform einer erfindungsgemäßen Profilrille 1 zu sehen sind. Die Rillenflanken 4, 5 der Profilrille 1 erstrecken sich in dem Querschnitt über einen Großteil eines radial oberen Bereichs 2 der Profilrille 1 parallel zur Radialrichtung. In einem radial unteren Bereich 3 nimmt die Profilrille 1 eine spezielle Form an, die anhand von Figur 2 näher beschreiben wird. Entlang der Längserstreckung der Profilrille 1 weist die Profilrille 1 wenigstens entlang des abgebildeten Längsabschnitts 19 einen gleichbleibenden Querschnitt auf.

Figur 2 zeigt eine Schnittansicht einer weiteren Ausführungsform des erfindungsgemäßen Laufstreifens, die der in Figur 1 gezeigten Ausführungsform sehr ähnlich ist. Die mit der Zeichnungsebene zusammenfallende Schnittebene wird von der Radialrichtung (von unten nach oben in der Zeichnungsebene) und einer weiteren zur Längserstreckung der Profilrille 1 senkrechten Richtung aufgespannt. Im radial oberen Bereich 2 erstrecken sich die erste Rillenflanke 4 und die zweite Rillenflanke 5 im Wesentlichen parallel zueinander, wobei eine zwischen den Rillenflanken 4, 5 ermittelte obere Breite 9 in der Figur 2 markiert ist. Der radial untere Bereich 3 ist an einem radial tiefsten Punkt 10 konkav gekrümmt. Weiterhin sind die erste und zweite Rillenflanke 4, 5 an einem ersten bzw. zweiten Punkt 6, 7 konkav gekrümmt. Zwischen dem ersten und zweiten Punkt 6, 7 weist die Profilrille ihre maximale Breite 8 auf. Die konkaven Krümmungen an dem ersten und zweiten Punkt 6, 7 sind durch jeweils eine erste bzw. zweite geradlinige Verbindung 15, 16 mit der konkaven Krümmung am radial tiefsten Punkt 10 verbunden. In dem gezeigten Ausführungsbeispiel stehen die geradlinigen Verbindungen 15, 16 in einem Winkel von etwa 60° zueinander. Übergänge zwischen dem radial oberen Bereich 2 und den konkav gekrümmten Abschnitten an dem ersten und zweiten Punkt 6, 7 sind in dem gezeigten Ausführungsbeispiel als konvex in die Profilrille 1 hineinragende Krümmungen ausgeführt. Die konkaven und konvexen Krümmungen sind als Kreisbögen ausgeführt, die tangential ineinander bzw. in die geradlinigen Verbindungen 15, 16 übergehen. Ein Krümmungsradius 11 zur Krümmung am radial tiefsten Punkt 10, Krümmungsradien 12, 13 zu den Krümmungen am ersten und zweiten Punkt 6, 7 sowie Krümmungsradien 17, 18 zu den konvexen Krümmungen gleichen einander in dem gezeigten Ausführungsbeispiel. Krümmungsmittelpunkte 14 der Krümmungskreise zu den drei konkaven Krümmungen sind in dem gezeigten Ausführungsbeispiel äquidistant, an den Eckpunkten eines imaginären gleichseitigen Dreiecks angeordnet.

### Bezugszeichenliste

- 1: Profilrille
- 2: radial oberer Bereich
- 3: radial unterer Bereich
- 4: erste Rillenflanke
- 5: zweite Rillenflanke
- 6: erster Punkt (an der ersten Rillenflanke)
- 7: zweiter Punkt (an der zweiten Rillenflanke)
- 8: maximale Breite
- 9: obere Breite
- 10: radial tiefster Punkt
- 11: Krümmungsradius (zur Krümmung am radial tiefsten Punkt)
- 12: Krümmungsradius (zur Krümmung am ersten Punkt)
- 13: Krümmungsradius (zur Krümmung am zweiten Punkt)
- 14: Krümmungsmittelpunkte von Krümmungskreisen
- 15: erste geradlinige Verbindung
- 16: zweite geradlinige Verbindung
- 17: Krümmungsradius (zu einer ersten konvexen Krümmung)
- 18: Krümmungsradius (zu einer zweiten konvexen Krümmung)
- 19: Längsabschnitt der Profilrille

## Patentansprüche

1. Laufstreifen für einen Fahrzeugreifen, wobei eine Profilrille (1) mit einem radial oberen Bereich (2) und einem radial unteren Bereich (3) sowie mit einer ersten Rillenflanke (4) und einer zweiten Rillenflanke (5) in dem Laufstreifen ausgebildet ist, wobei eine in dem radial unteren Bereich (3) zwischen einem ersten Punkt (6) an der ersten Rillenflanke (4) und einem zweiten Punkt (7) an der zweiten Rillenflanke (5) gemessene maximale Breite (8) der Profilrille (1) größer ist als eine in dem radial oberen Bereich (2) zwischen den beiden Rillenflanken (4, 5) gemessene oberen Breite (9) der Profilrille, wobei ein Boden der Profilrille (1) an einem radial tiefsten Punkt (10) konkav gekrümmt ist, wobei in dem radial unteren Bereich (2) die erste Rillenflanke (4) an dem ersten Punkt (6) und die zweite Rillenflanke (5) an dem zweiten Punkt (7) konkave Krümmungen aufweisen, wobei die Krümmung um den radial tiefsten Punkt (10) und die Krümmung um den ersten Punkt (6) durch eine erste geradlinige Verbindung (15) verbunden sind und wobei die Krümmung um den radial tiefsten Punkt (10) und die Krümmung um den zweiten Punkt (7) durch eine zweite geradlinige Verbindung (16) verbunden sind, wobei die erste und die zweite geradlinige Verbindung (15, 16) in einem Winkel von 20° bis 80° zueinander stehen, **dadurch gekennzeichnet,**
**dass** die Krümmungen an dem radial tiefsten Punkt (10) und an dem ersten und zweiten Punkt (6, 7) beschreibende Krümmungsradien (11, 12, 13) paarweise in einem Verhältnis von nicht mehr als 2:1 bzw. nicht weniger als 1:2 zueinander stehen.

2. Laufstreifen gemäß Anspruch 1, **dadurch gekennzeichnet, dass** die erste und die zweite geradlinige Verbindung (15, 16) in einem Winkel von 45° bis 70°, vorzugsweise von 55° bis 65° zueinander stehen.

3. Laufstreifen gemäß einem der Ansprüche 1 oder 2, **dadurch gekennzeichnet, dass** die Krümmungen an dem ersten und an dem zweiten Punkt (6, 7) beschreibende Krümmungsradien (12, 13) in einem Verhältnis von nicht mehr als 2:1 bzw. nicht weniger als 1:2 zueinander stehen und einander vorzugsweise in ihrer Länge gleichen.

4. Laufstreifen gemäß Anspruch 3, **dadurch gekennzeichnet, dass** die Krümmungen an dem radial tiefsten Punkt (10) und an dem ersten und zweiten Punkt (6, 7) beschreibende Krümmungsradien (11, 12, 13) einander in ihrer Länge gleichen.

5. Laufstreifen gemäß einem der Ansprüche 1 bis 4, **dadurch gekennzeichnet, dass** Krümmungsmittelpunkte (14) von Krümmungskreisen zu den Krümmungen an dem radial tiefsten Punkt (10), an dem ersten Punkt (6) und an dem zweiten Punkt (7) äquidistant zu einander angeordnet sind.

6. Laufstreifen gemäß einem der Ansprüche 1 bis 5, **dadurch gekennzeichnet, dass** der radial untere Bereich (3) an der ersten und zweiten Rillenflanke (4, 5) jeweils entlang einer konvexen Krümmung in den radial oberen Bereich (2) übergeht.

7. Laufstreifen gemäß Anspruch 6, **dadurch gekennzeichnet, dass** die konvexen Krümmungen beschreibende Krümmungsradien (17, 18) einander in ihrer Länge gleichen.

8. Laufstreifen gemäß Anspruch 7, **dadurch gekennzeichnet, dass** die die konvexen Krümmungen beschreibenden Krümmungsradien (17, 18) und die Krümmungen an dem radial tiefsten Punkt (10), an dem ersten Punkt (6) und/oder an dem zweiten Punkt (7) beschreibende Krümmungsradien (11, 12, 13) einander in ihrer Länge gleichen.

9. Laufstreifen gemäß einem der Ansprüche 1 bis 8, **dadurch gekennzeichnet, dass** die maximale Breite (8) in dem radial unteren Bereich (3) der Profilrille (1) zwischen 2 mm und 20 mm, vorzugsweise zwischen 4 mm und 8 mm beträgt.

10. Laufstreifen gemäß einem der Ansprüche 1 bis 9, **dadurch gekennzeichnet, dass** die in dem radial oberen Bereich (2) zwischen den beiden Rillenflanken (4, 5) gemessene obere Breite (9) der Profilrille (1) zwischen 0,5 mm und 6 mm, vorzugsweise zwischen 1 mm und 3 mm beträgt.

11. Laufstreifen gemäß einem der Ansprüche 1 bis 10, **dadurch gekennzeichnet, dass** sich der radial untere Bereich (3) über ein Viertel bis eine Hälfte einer radialen Tiefe der Profilrille (1) erstreckt.

12. Laufstreifen gemäß einem der Ansprüche 1 bis 11, **dadurch gekennzeichnet, dass** entlang eines Längsabschnitts (19) der Profilrille (1) durchgehend die Merkmale eines der Ansprüche 1 bis 11 erfüllt sind, wobei der Längsabschnitt (19) wenigstens fünfmal so lang, vorzugsweise wenigstens zehnmal so lang ist wie die maximale Breite (8) breit ist.

13. Fahrzeugreifen mit einem Laufstreifen gemäß einem der Ansprüche 1 bis 12.

## Claims

1. Tread for a vehicle tyre, wherein formed in the tread is a profile groove (1) having a radially upper region (2) and a radially lower region (3) and having a first groove flank (4) and a second groove flank (5), wherein a maximum width (8) of the profile groove (1), measured in the radially lower region (3) between a first point (6) on the first groove flank (4) and a second point (7) on the second groove flank (5), is larger than an upper width (9) of the profile groove measured in the radially upper region (2) between the two groove flanks (4, 5), wherein a base of the profile groove (1) is curved concavely at a radially lowest point (10), wherein in the radially lower region (2) the first groove flank (4) at the first point (6) and the second groove flank (5) at the second point (7) have concave curvatures, wherein the curvature about the radially lowest point (10) and the curvature about the first point (6) are connected by a first rectilinear connection (15), and wherein the curvature about the radially lowest point (10) and the curvature about the second point (7) are connected by a second rectilinear connection (16), wherein the first and the second rectilinear connection (15, 16) are at a mutual angle of 20° to 80°, **characterized in that**
the curvature radii (11, 12, 13) describing curvatures at the radially lowest point (10) and at the first and the second point (6, 7) are in pairs at a mutual ratio of not more than 2:1, or not less than 1:2, respectively.

2. Tread according to Claim 1, **characterized in that** the first and the second rectilinear connection (15, 16) are at a mutual angle of 45° to 70°, preferably of 55° to 65°.

3. Tread according to either of Claims 1 or 2, **characterized in that** the curvature radii (12, 13) describing curvatures at the first and at the second point (6, 7) are at a mutual ratio of not more than 2:1, or not less than 1:2, respectively, and are preferably identical in terms of length.

4. Tread according to Claim 3, **characterized in that** the curvature radii (11, 12, 13) describing curvatures at the radially lowest point (10) and at the first and the second point (6, 7) are identical in terms of length.

5. Tread according to one of Claims 1 to 4, **characterized in that** the centres of curvature (14) of curvature circles to the curvatures are disposed so as to be equidistant to one another at the radially lowest point (10), at the first point (6) and at the second point (7).

6. Tread according to one of Claims 1 to 5, **characterized in that** the radially lower region (3) on the first and second groove flanks (4, 5) transitions in each case along a convex curvature into the radially upper region (2).

7. Tread according to Claim 6, **characterized in that** the curvature radii (17, 18) describing convex curvatures are identical in terms of length.

8. Tread according to Claim 7, **characterized in that** the curvature radii (17, 18) describing the convex curvatures and the curvature radii (11, 12, 13) describing curvatures at the radially lowest point (10), at the first point (6) and/or at the second point (7) are identical in terms of length.

9. Tread according to one of Claims 1 to 8, **characterized in that** the maximum width (8) in the radially lower region (3) of the profile groove (1) is between 2 mm and 20 mm, preferably between 4 mm and 8 mm.

10. Tread according to one of Claims 1 to 9, **characterized in that** the upper width (9) of the profile groove (1), measured in the radially upper region (2) between the two groove flanks (4, 5), is between 0.5 mm and 6 mm, preferably between 1 mm and 3 mm.

11. Tread according to one of Claims 1 to 10, **characterized in that** the radially lower region (3) extends over a quarter to a half of a radial depth of the profile groove (1).

12. Tread according to one of Claims 1 to 11, **characterized in that** the features of one of Claims 1 to 11 are satisfied continuously along a longitudinal portion (19) of the profile groove (1), wherein the longitudinal portion (19) is at least five times, preferably at least ten times, the maximum width (8).

13. Vehicle tyre having a tread according to one of Claims 1 to 12.

## Revendications

1. Bande de roulement pour un pneu de véhicule, où une rainure de profil (1) avec une zone radialement supérieure (2) et une zone radialement inférieure (3) ainsi qu'avec un premier flanc de rainure (4) et un deuxième flanc de rainure (5) est réalisée dans la bande de roulement, où une largeur maximale (8) de la rainure profilée (1) mesurée dans la zone radialement inférieure (3) entre un premier point (6) sur le premier flanc de rainure (4) et un deuxième point (7) sur le deuxième flanc de rainure (5) est supérieure à une largeur supérieure (9) de la rainure de profil mesurée dans la zone radialement supérieure (2) entre les deux flancs de rainure (4, 5), où un fond de la rainure de profil (1) est incurvé de manière concave au niveau d'un point radialement le plus profond (10), où dans la zone radialement inférieure (2), le premier flanc de rainure (4) au niveau du premier point (6) et le deuxième flanc de rainure (5) au niveau du deuxième point (7) présentent des courbures concaves, où la courbure autour du point radialement le plus profond (10) et la courbure autour du premier point (6) sont reliées par une première liaison rectiligne (15) et où la courbure autour du point radialement le plus profond (10) et la courbure autour du deuxième point (7) sont reliées par une deuxième liaison rectiligne (16), où les première et deuxième liaisons rectilignes (15, 16) présentent l'une par rapport à l'autre un angle de 20° à 80°,
**caractérisée**
**en ce que** les rayons de courbure (11, 12, 13) décrivant les courbures au niveau du point radialement le plus profond (10) et au niveau des premier et deuxième points (6, 7) présentent entre eux, pris par paires, un rapport n'excédant pas 2:1 ou n'étant pas inférieur à 1:2.

2. Bande de roulement selon la revendication 1, **caractérisée en ce que** les première et deuxième liaisons rectilignes (15, 16) présentent l'une par rapport à l'autre un angle de 45° à 70°, de préférence de 55° à 65°.

3. Bande de roulement selon l'une quelconque des revendications 1 ou 2, **caractérisée en ce que** les rayons de courbure (12, 13) décrivant les courbures au niveau des premier et deuxième points (6, 7) présentent entre eux un rapport n'excédant pas 2:1 ou n'étant pas inférieur à 1:2 et sont de préférence identiques en longueur.

4. Bande de roulement selon la revendication 3, **caractérisée en ce que** les rayons de courbure (11, 12, 13) décrivant les courbures au niveau du point radialement le plus profond (10) et au niveau des premier et deuxième points (6, 7) sont identiques en longueur.

5. Bande de roulement selon l'une quelconque des revendications 1 à 4, **caractérisée en ce que** les centres de courbure (14) des cercles de courbure correspondant aux courbures au niveau du point radialement le plus profond (10), au niveau du premier point (6) et au niveau du deuxième point (7) sont agencés de manière équidistante les uns par rapport aux autres.

6. Bande de roulement selon l'une quelconque des revendications 1 à 5, **caractérisée en ce que** la zone radialement inférieure (3) au niveau des premier et deuxième flancs de rainure (4, 5) se prolonge respectivement dans la zone radialement supérieure (2) le long d'une courbure convexe.

7. Bande de roulement selon la revendication 6, **caractérisée en ce que** les rayons de courbure (17, 18) décrivant les courbures convexes sont identiques en longueur.

8. Bande de roulement selon la revendication 7, **caractérisée en ce que** les rayons de courbure (17, 18) décrivant les courbures convexes et les rayons de courbure (11, 12, 13) décrivant les courbures au niveau du point radialement le plus profond (10), au niveau du premier point (6) et/ou au niveau du deuxième point (7) sont identiques en longueur.

9. Bande de roulement selon l'une quelconque des revendications 1 à 8, **caractérisée en ce que** la largeur maximale (8) dans la zone radialement inférieure (3) de la rainure de profil (1) est comprise entre 2 mm et 20 mm, de préférence entre 4 mm et 8 mm.

10. Bande de roulement selon l'une quelconque des revendications 1 à 9, **caractérisée en ce que** la largeur supérieure (9) de la rainure de profil (1), mesurée dans la zone radialement supérieure (2) entre les deux flancs de rainure (4, 5), est comprise entre 0,5 mm et 6 mm, de préférence entre 1 mm et 3 mm.

11. Bande de roulement selon l'une quelconque des revendications 1 à 10, **caractérisée en ce que** la zone radialement inférieure (3) s'étend sur un quart à une moitié d'une profondeur radiale de la rainure de profil (1).

12. Bande de roulement selon l'une quelconque des revendications 1 à 11, **caractérisée en ce que** les caractéristiques de l'une quelconque des revendications 1 à 11 sont satisfaites de manière continue le long d'une section longitudinale (19) de la rainure de profil (1), la section longitudinale (19) étant au moins cinq fois plus longue, de préférence au moins dix fois plus longue que la largeur maximale (8).

13. Pneu de véhicule avec une bande de roulement selon l'une quelconque des revendications 1 à 12.
